Europäisches Patentamt

European Patent Office

Office européen des brevets

(19)

(11) Veröffentlichungsnummer: **0 330 993 B1**

## (12) EUROPÄISCHE PATENTSCHRIFT

(45) Veröffentlichungstag der Patentschrift:
08.05.91 Patentblatt 91/19

(51) Int. Cl.⁵: **F16D 3/41**, F16C 33/78

(21) Anmeldenummer: **89103131.2**

(22) Anmeldetag: **23.02.89**

(54) Lagerungsanordnung für ein Zapfenkreuz eines Kreuzgelenkes.

(30) Priorität: 29.02.88 DE 3806397

(43) Veröffentlichungstag der Anmeldung:
06.09.89 Patentblatt 89/36

(45) Bekanntmachung des Hinweises auf die
Patenterteilung:
08.05.91 Patentblatt 91/19

(84) Benannte Vertragsstaaten:
BE DE ES FR GB IT SE

(56) Entgegenhaltungen:
DE-A- 3 024 226
DE-C- 3 639 315
DE-U- 8 631 594
US-A- 2 773 367
US-A- 3 138 942
US-A- 4 419 086

(73) Patentinhaber: GKN CARDANTEC
INTERNATIONAL GESELLSCHAFT FUR
ANTRIEBSTECHNIK MBH
Westendhof 5
W-4300 Essen 1 (DE)

(72) Erfinder: Schultze, Jürgen
Zwergstrasse 5
W-4300 Essen 11 (DE)

(74) Vertreter: Harwardt, Günther, Dipl.-Ing. et al
HARWARDT NEUMANN PATENTANWÄLTE
Scheerengasse 2 Postfach 1455
W-5200 Siegburg 2 (DE)

EP 0 330 993 B1

## Beschreibung

Die Erfindung betrifft eine Lagerungsanordnung für die Lagerung der Zapfen eines Zapfenkreuzes eines Kreuzgelenkes in den zugehörigen Gelenkgabeln, mit in den Bohrungen derselben aufgenommenen und axial fixierten Lagerbüchsen, in denen jeweils ein Zapfen unter Zwischenschaltung von Wälzkörpern aufgenommen ist, wobei die Zapfen mit ihren Endflächen gegenüber dem Boden der Lagerbüchse abgestützt sind und in den Ringraum zum offenen Ende der Lagerbüchsen hin eine die Wälzkörper haltende Stützscheibe und eine Dichtung zur Abdichtung des Lagerraumes zwischen der Lagerbüchseninnenwandung und der Zapfenaußenfläche vorgesehen ist, wobei die eine Bohrung aufweisende Stützscheibe an einem Absatz des zugehörigen Zapfens des Zapfenkreuzes in Richtung dessen Drehachse abgestützt ist, und daß anschließend an die Stützscheibe in Richtung auf das offene Ende der Lagerbüchse hin die Dichtung in den Ringraum eingesetzt ist.

Bei einer solchen, aus der US-A-2996901 bekannten Anordnung ist der Zapfen mit einem speziellen Absatz versehen, der rechtwinklig zur Zapfenachse verläuft, an dessen Stirnfläche sich ein Stützring abstützt.

Von Nachteil bei dieser Ausführung ist, daß jeweils ein abrupter Übergang erforderlich ist. Dies bedeutet, daß Kerbwirkungen entstehen können.

Es sind auch Lösungen bekannt, bei denen die Stützscheibe für die Wälzkörper mit der Dichtung durch Vulkanisieren Verbunden sind (DE-U-8416023.3).

Von Nachteil dabei ist, daß die Stützkräfte über die Dichtung aufgenommen werden müssen. Dabei wird die Dichtwirkung beeinflußt, denn durch die Stützkräfte verformt sich die Dichtung, was auch von Einfluß auf die Anlage der Dichtlippen an den zugehörigen Dichtflächen ist. Die Verformbarkeit bringt auch noch den Nachteil mit sich, daß die Wälzkörper axial begrenzt wandern können und dabei die Gefahr besteht, daß sie sich schräg stellen.

Ausgehend hiervon liegt der Erfindung die Aufgabe zugrunde, eine Lagerungsanordnung zu schaffen, bei der die Dichtung selbst oder auch die Halterung der Dichtung frei von axialen Kräften der Lagerkörper sind, d.h. von diesen nicht beaufschlagt werden, und darüberhinaus eine sichere Abstützung erreicht wird, die eine Gestaltung des Zapfens erlaubt, bei dem eine Schwächung oder eine Kerbwirkung vermieden wird und darüberhinaus einfach herzustellen ist.

Diese Aufgabe wird erfindungsgemäß dadurch gelöst, daß der Absatz als sich kegelig zum offenen Ende der Lagerbüchse hin vergrößernde Fläche ausgebildet und die Stützscheibe mit einer entsprechenden kegeligen Bohrung versehen und die Dichtung der Lagerbüchse über Reibschluß fest zugeordnet ist.

Von Vorteil bei dieser Ausbildung ist, daß die Wälzkörper sich in axialer Richtung, d.h. in Richtung auf die Drehachse des Zapfenkreuzes zu, unmittelbar an einer separaten Stützscheibe abstützen, welche ihrerseits axial fest an dem Absatz des zugehörigen Zapfens abgestützt ist. Die axial daran anschließend in den Ringraum eingesetzte Dichtung ist frei von jeglichen Axialkräften, d.h. sie brauch auch nicht an der zugehörigen Aufnahme, gegenüber der sie drehfest angeordnet sein soll, durch Formschluß fixiert zu sein. Es genügt ein Reibschluß. Dabei muß der Reibschluß so bemessen sein, daß die Dichtung nicht unter dem Druck des bei Abschmieren eingepreßten Schmiermittels aus ihrem Sitz herausgedrückt wird. Da aber aufgrund der vorgeschalteten Stützscheibe genügend Drosselspalte vorgesehen sind, vermindert sich der Druck bei Abschmieren so, daß keine wesentlichen Auspreßkräfte entstehen. Außerdem sind die Dichtlippen in der Regel so angeordnet, daß unter dem Abschmierdruck ein Öffnen erfolgt, so daß das Schmiermittel entweichen kann.

Ferner wird durch den Kegeligen Absatz ein guter Übergang, ohne die Festigkeit vermindernde Kerben, erzielt.

Zur Erleichterung der Durchschmierbarkeit ist die Stützscheibe im Bereich der Bohrung mit umfangsverteilt angeordneten Ausnehmungen zur Bildung von Durchlaßkanälen versehen. Diese münden im Bereich der Dichtlippen, so daß, das ausgepreßte Schmiermittel unmittelbar in Fließrichtung diese von ihrem Sitz abheben kann. Damit kein Druckaufbau erfolgen kann, ist die Summe der Durchlaßquerschnitte der Durchlaßkanäle größer, als die der Schmiernuten in der Stirnscheibe.

Zur Erhöhung der Tragkraft ist in weiterer Ausbildung vorgesehen, die Stützscheibe in ihrem dem Absatz benachbarten Bereich mit einem axial vorspringenden Verstärkungsbund zu versehen, in dem sich die Bohrung befindet.

Schließlich ist vorgesehen, die Stützscheibe aus dem Werkstoff Polyamid herzustellen. Dieser Werkstof besitzt einerseits die genügende Festigkeit zur wirksamen Abstutzung der Wälzkörper, aber auch andererseits in Paarung mit dem aus Stahl hergestellten Zapfenkreuz eine gute Gleiteigenschaft, so daß sich die Stützscheibe auch auf dem Absatz ohne große Reibwirkung oder Verschleißerscheinung bewegen kann, wenn die durch die Wälzkörper übertragenen Axialkräfte einmal größer werden.

Ein bevorzugtes Ausführungsbeispiel ist in der Zeichnung schematisch dargestellt.

Es zeigt,

Figur 1 eine schematische Darstellung einer Gelenkwelle,

Figur 2 einen Schnitt A-A gemäß Fig. 1 in vergrößertem Maßstabe,

Figur 3 eine Einzelheit A gemaß Figur 2 im vergrößertem Maßstabe und

Figur 4 eine Draufsicht auf die Stützscheibe.

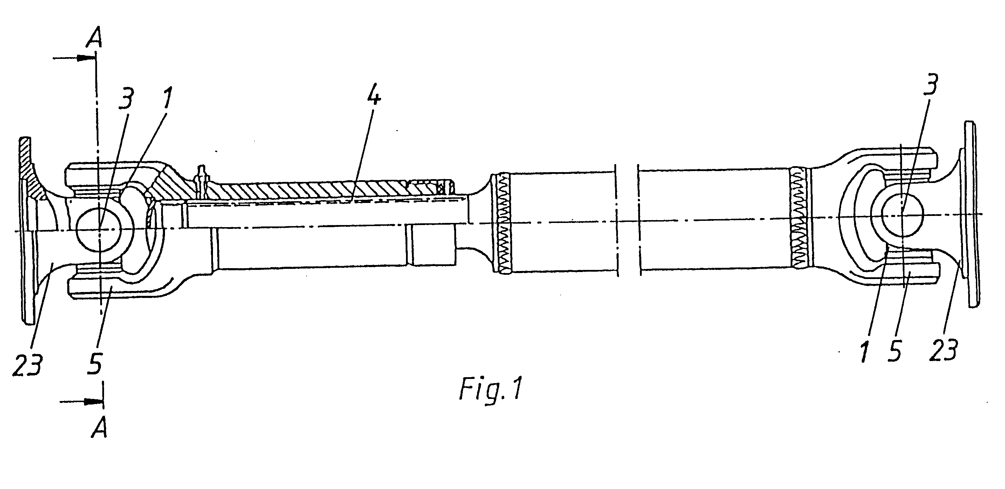

Die in Figur 1 dargestellte Kreuzgelenkwelle besteht aus den beiden Kreuzgelenken 3, die durch eine Zwischenwelle 4 miteinander verbunden sind. Die Zwischenwelle 4 sorgt für eine drehmomentmäßige Verbindung, die jedoch auch Längenveränderungen zuläßt, zwischen den beiden Kreuzgelenken 3. Die beiden Kreuzgelenke 3 weisen jeweils zwei Gelenkgabeln 5, 23 auf, welche Bohrungen besitzen, in denen die Zapfen des Zapfenkreuzes 1 unter Zwischenschaltung von Lagerungsanordnungen aufgenommen sind. Eine der Gelenkgabeln ist als Mitnehmergabel 5 und die andere Gelenkgabel als Flanschgabel 23 ausgebildet. Die Flanschgabeln 23 dienen unter Zuhilfenahme ihrer Flansche zur Befestigung an einem treibenden bzw. getriebenen Maschinenelement.

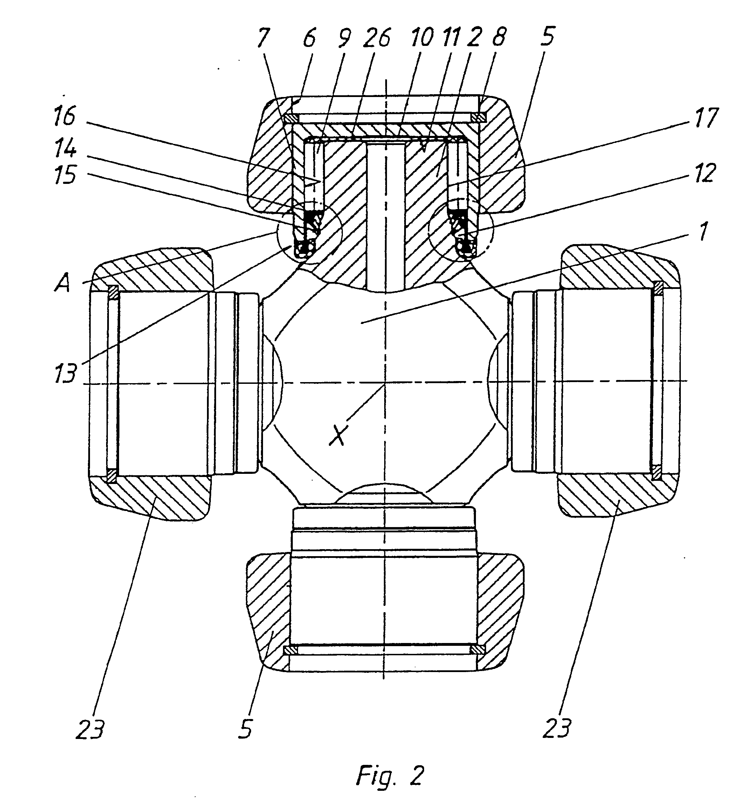

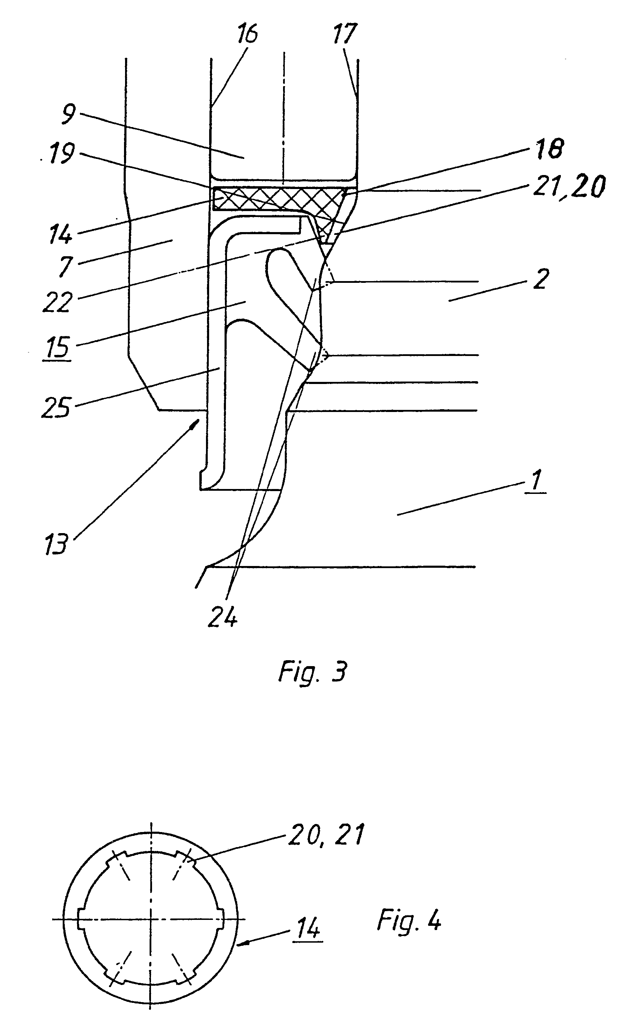

Wie aus Figur 2 ersichtlich ist, umfaßt das Zapfenkreuz 1 vier rechtwinkelig zueinander stehende Zapfen 2. Jeder Zapfen 2 ist unter Zwischenschaltung von Wälzkörpern 9 in einer Lagerbüchse 7 aufgenommen. Die Lagerbüchse 7 ist in die Bohrung 6 der zugehörigen Gelenkgabel 5 bwz. Flanschgabel 23 eingesetzt und über einen Sicherungsring 8 gegen axiales Verschieben gesichert. Die Wälzkörper 9 sind auf den zylindrischen Zapfenaußenflächen 17 abrollend angeordnet. Sie rollen ferner an der Innenwandung 16 der Lagerbüchse 7 ab. Die Zapfen 2 stützen sich über ihre Zapfenendfläche 10, beispielsweise unter Zwischenschaltung einer Anlaufscheibe 26 am Boden 11 der Lagerbüchse 7 ab. Es ist jedoch auch denkbar, daß aufgrund der gewählten Materialpaarung die Anlaufscheibe 26 entfallen kann und die Zapfenendfläche 10 unmittelbar an dem Boden 11 der Lagerbüchse 7 anliegt. In Richtung auf das offene Ende 13 der Lagerbüchse 7 stützen sich die über den Umfang der Zapfenaußenfläche 17 angeordneten Wälzkörper 9 an einer Stützscheibe 14 ab. Die Stützscheibe 14 weist eine kegelige Bohrung 18 auf, die, wie insbesondere aus Figur 3 ersichtlich ist, in dem mit einem Verstärkungsbund 22 versehenen Bereich der Stützscheibe angeordnet ist. Mit der kegeligen Bohrung 18 stützt sich die Stützscheibe 14 an einem sich in Richtung auf die Drehachse X bzw. das offene Ende 13 der Lagerbüchse 7 hin kegelig erweiternden Absatz 19 des Zapfens 2 ab. Die Stützscheibe 14 ist also axial gegenüber dem Zapfen 2 fixiert und nimmt die bei Abbeugung und Rotation des Kreuzgelenkes 3 auftretenden Axialkräfte, die eine Verschiebung der Wälzkörper 9 bewirken, auf. Die Wälzkörper 9 stützen sich mit ihren Stirnflachen an der Stützscheibe 14 ab. Die Axialkraft wird über die Stützscheibe 14 und den Absatz 19 in den Zapfen 2 eingeleitet. Axial anschließend in Richtung auf die Drehachse X bzw. das offene Ende 13 der Lagerbüchse 7 hin ist in den Ringraum 12, der zwischen der Innenwandung 16 der Lagerbüchse 7 und der Zapfenaußenfläche 17 in diesem Bereich gebildet wird, eine Dichtung 15 zur Abdichtung des Lagerraumes eingesetzt. Wie aus Figur 3 ersichtlich, ist die Dichtung 15 der Lagerbüchse 7 fest zugeordnet. Die Dichtung 15 weist eine metallene Verstärkungshülse 25 auf, an die der die Dichtlippen 24 aufweisende Weichdichtungsteil anvulkanisiert ist. Wie aus Figur 3 ebenfalls ersichtlich, weisen die Dichtlippen 24 auf das offene Ende 13 der Lagerbüchse 7 zu. Die Dichtung 15 ist nur über Reibschluß in der Lagerbüchse 7 gehalten. Es ist also keine besondere Fixierung durch Einpräge oder sonstige Verbindung erforderlich.

Wie insbesondere aus den Figuren 3 und 4 ersichtlich ist, besitzt die Stützscheibe 14 umfangsverteilt angeordnete Ausnehmungen 20 im Bereich ihrer kegeligen Bohrung 18. Diese umfangsverteilt angeordneten Ausnehmungen 20 bilden bei Anlage der Stützscheibe 14 mit ihrer kegeligen Bohrung 18 an dem kegeligen Absatz 19 des Zapfens, zwischen beiden Durchlaßkanäle 21. Diese Durchlaßkanäle 21 sorgen dafür, daß beim Abschmieren, d.h. beim Einpressen von Schmiermittel in die Lagerung über, beispielweise im Zapfenkreuz vorgesehene und in den Zapfenendflächen 10 mündenden Schmiermittelbohrungen in den Bereich der Wälzkörper 9, dieses über die Durchlaßkanäle 21 in den Bereich der Dichtlippen 24 eintreten kann, welche aufgrund ihrer auf die Drehachse X zugerichtete Anordnung unter dem Schmiermitteldruck abheben können und verbrauchtes Schmiermittel austreten lassen. Die Anordnung der Schmiermittelkanäle 21, insbesondere deren Querschnittsgestaltung, d.h. die Spaltwirkung die aufgrund der Durchlaßkanäle 21 erzielt wird, sorgen dafür, daß der Schmierdruck reduziert wird und die Dichtung 15 beispielsweise nicht aufgrund des Schmierdruckes aus ihrem Sitz in der Lagerbüchse 7 herausgepreßt werden kann. Ein wesentlicher Vorteil, der mit der gewählten Anordnung und festen Zuordnung der Dichtung 15 zur Lagerbüchse 7 verbunden ist, ist, daß eine vormontierte Baueinheit, bestehend aus Lagerbüchse 7, der beispielsweise der vorhandenen Stirnanlaufscheibe 26, den Wälzkörpern 9, der Siützscheibe 14, der Dichtung 15 und gegebenenfalls einer weiteren Vordichtung gebildet werden kann. Diese kann insgesamt bei der Montage des Zapfenfreuzes in die Bohrung 6 der Gelenkgabeln 5 bzw. Flanschgabeln 23 nach Einfädeln des Zapfenkreuzes 1 von außen auf die Zapfen 2 eingeschoben werden.

1 Zapfenkreuz
2 Zapfen
3 Kreuzgelenk
4 Zwischenwelle
5 Gelenkgabel
6 Bohrung in Gelenkgabel
7 Lagerbüchse
8 Fixierring
9 Wälzkörper

10 Zapfenendfläche
11 Boden der Lagerbüchse
12 Ringraum
13 offenes Ende der Lagerbüchse
14 Stützscheibe
15 Dichtung
16 Innenwandung der Lagerbüchse
17 Zapfenaußenfläche
18 Bohrung der Stützscheibe
19 Absatz am Zapfen
20 Ausnehmung
21 Durchlaßkanal
22 Verstärkungsbund
23 Flanschgabel
24 Dichtlippen
25 Verstärkungshülse
26 Anlaufscheibe

## Ansprüche

1. Lagerungsanordnung für die Lagerung der Zapfen eines Zapfenkreuzes eines Kreuzgelenkes in den zugehörigen Gelenkgabeln, mit in den Bohrungen derselben aufgenommenen und axial fixierten Lagerbüchsen, in denen jeweils ein Zapfen unter Zwischenschaltung von Wälzkörpern aufgenommen ist, wobei die Zapfen mit ihren Endflächen gegenüber dem Boden der Lagerbüchsen abgestützt sind und in den Ringraum zum offenen Ende der Lagerbüchse eine die Wälzkörper haltende Stützscheibe und eine Dichtung zur Abdichtung des Lagerraumes zwischen der Lagerbüchseninnenwandung und der Zapfenaußenfläche vorgesehen ist, wobei die eine Bohrung aufweisende Stützscheibe an einem Absatz des zugehörigen Zapfens des Zapfenkreuzes in Richtung dessen Drehachse abgestützt ist, und daß anschließend an die Stützscheibe in Richtung auf das, offene Ende der Lagerbüchse hin die Dichtung in den Ringraum eingesetzt ist. dadurch gekennzeichnet, daß der Absatz (19) als sich kegelig zum offenen Ende (13) der Lagerbüchse (7) hin vergrößernde Fläche ausgebildet und die Stützscheibe (14) mit einer entsprechenden kegeligen Bohrung (18) versehen und die Dichtung (15) der Lagerbüchse (7) über Reibschluß fest zugeordnet ist.

2. Lagerungsanordnung nach Anspruch 1, dadurch gekennzeichnet, daß die Stützscheibe (14) im Bereich der Bohrung (18) mit umfangsverteilt angeordneten Ausnehmungen (20) zur Bildung von Durchlaßkanälen (21) versehen ist.

3. Lagerungsanordnung nach Anspruch 1, dadurch gekennzeichnet, daß die Stützscheibe (14) in ihrem dem Absatz (19) benachbarten Bereich mit einem axial vorspringenden verstärkungsbund (22) versehen ist, in dem sich die Bohrung (18) befindet.

4. Lagerungsanordnung nach Anspruch 1, dadurch gekennzeichnet, daß die Stützscheibe (14) aus dem Werkstoff Polyamid besteht.

## Claims

1. A bearing assembly for supporting the arms of a cross member of a universal joint in the associated joint yokes, having bearing bushes received and axially fixed in bores of the joint yokes, with each bearing bush accommodating an arm with rolling members arranged therebetween ; the arms, by their end faces, being supported relative to the base of the bearing bushes ; and the annular space, towards the open end of the bearing bush, being provided with a supporting disc holding the rolling members and with a seal for sealing the bearing space between the inner wall of the bearing bush and the outer arm face ; the supporting disc provided with a bore being supported on a step of the associated arm of the cross member in the direction of its axis of rotation ; and in the region adjoining the supporting disc, in the direction of the open end of the bearing bush, the seal being inserted into the annular space, characterised in that the step (19) has the form of a face increasing conically towards the open end (13) of the bearing bush (17), that the supporting disc (14) is provided with a corresponding conical bore (18) and that the seal (15) is firmly associated with the bearing bush (7) through friction-locking.

2. A bearing assembly according to claim 1, characterised in that in the region of the bore (18), the supporting disc (14) is provided with circumferentially distributed recesses (20) for the purpose of forming through channels (21).

3. A bearing assembly according to claim !, characterised in that in its region adjoining the step (19), the supporting disc (14) is provided with an axially projecting reinforcing collar (22) in which the bore (18) is provided.

4. A bearing assembly according to claim 1, characterised in that the supporting disc (14) consists of polyamide.

## Revendications

1. Dispositif pour le montage rotatif des tourillons d'un croisillon de joint à croisillon dans les fourches correspondantes de ce joint, comprenant des douilles de paliers arrêtées axialement dans les perçages de ces fourches, dans chacune desquelles un tourillon est disposé avec interposition de corps roulants, les tourillons prenant appui sur le fond des douilles de paliers par leur surface d'extrémité, et une rondelle d'appui servant à retenir les corps roulants étant prévue dans l'espace annulaire, vers l'extrémité ouverte de la douille de palier, et une garniture d'étanchéité servant à fermer hermétiquement la cavité du palier entre la paroi intérieure de la douille et la surface extérieure du tourillon, la rondelle d'appui munie d'un perçage prenant appui contre un épaulement du tourillon correspondant du croisillon en direction de l'axe de rotation de ce dernier, et la garniture d'étanchéité étant emboîtée dans l'espace annulaire à la suite de la rondelle d'appui, dans le sens allant vers l'extrémité ouverte de la douille, caractérisé en ce que l'épaulement (19) est constitué par une surface qui s'évase en cône vers l'extrémité ouverte (13) de la douille de palier (7), la rondelle d'appui (14) est munie d'un perçage conique (18) et la garniture d'étanchéité (15) est fixée à la douille de palier (7) par friction.

2. Dispositif selon la revendication 1, caractérisé en ce que, dans la région du perçage (18), la rondelle d'appui (14) est munie d'évidements (20) répartis sur la circonférence pour former des canaux de passage (21).

3. Dispositif selon la revendication 1, caractérisé en ce que, dans sa région adjacente à l'épaulement (19), la rondelle d'appui (14) est munie d'un collet de renforcement (22) dans lequel se trouve le perçage (18).

4. Dispositif selon la revendication 1, caractérisé en ce que la rondelle d'appui (14) est faite de polyamide.

*Fig.1*

EP 0 330 993 B1

Fig. 2

Fig. 3

Fig. 4